# FASCICULE DE BREVET EUROPEEN

(11) **EP 1 916 391 B1**
(45) Date de publication et mention de la délivrance du brevet: **21.02.2018**
(21) Numéro de dépôt: 07119338.7
(22) Date de dépôt: 25.10.2007
(51) Int. Cl.: F01D 21/12, F01D 21/04, F01D 21/06

(54) **Méthode et dispositif pour réduire la vitesse en cas de rupture d'arbre de turbine de moteur à turbine à gaz**
Methode und Vorrichtung zur Geschwindigkeitsreduzierung im Falle eines Turbinenwellenbruchs in einem Gasturbinenmotor
Method and device for reducing speed in the event of breakage of the turbine shaft of a gas-turbine engine

(30) Priorité: 25.10.2006 FR 0654537
(43) Date de publication de la demande: 30.04.2008
(73) Titulaire: Safran Aircraft Engines, 75015 Paris (FR)
(72) Inventeur: Mons, Claude Marcel, 77176, SAVIGNY LE TEMPLE (FR)
(74) Mandataire: Gevers & Orès

(56) Documents cités:
- EP-A1- 0 374 003
- EP-A1- 1 455 054
- GB-A- 877 127

## Description

La présente invention concerne le domaine des moteurs à turbine à gaz, en particulier des turboréacteurs multiflux, et porte sur un système permettant de détecter la rupture d'un arbre de la machine afin d'en commander l'arrêt dans un délai aussi bref que possible.

Dans un turboréacteur multicorps à multiflux et turbo soufflante, cette dernière est entraînée par la turbine basse pression. Lorsque l'arbre reliant le rotor de soufflante à celui de la turbine se rompt, la charge mécanique sur la turbine est brutalement annulée alors que le flux de gaz moteur continue à transmettre son énergie au rotor. Il s'ensuit une augmentation rapide de la vitesse de rotation du rotor qui est susceptible d'atteindre sa limite de résistance et d'éclater avec les conséquences catastrophiques qui en résultent.

Des moyens assurant le freinage du rotor lorsque survient un tel incident ont été proposés. Le déplacement axial du rotor, consécutif à la rupture de l'arbre, déclenche l'actionnement de mécanismes visant à en dissiper l'énergie cinétique. Il s'agit par exemple d'ailettes de la roue adjacente de distributeurs qui sont basculées en direction des aubes du rotor de manière à venir s'interposer entre elles et couper leur trajectoire. L'énergie cinétique est dissipée par le frottement des pièces entre elles, leur déformation, voire leur rupture. Cette solution entraîne des coûts de réparation importants en raison des dégâts occasionnés sur les aubages.

On a proposé aussi d'interrompre l'arrivée de carburant alimentant la chambre de combustion afin d'éliminer la source d'énergie par laquelle le rotor est accéléré. Une solution consiste à surveiller la vitesse de rotation des arbres par des moyens de mesure redondants et à commander l'interruption de l'alimentation en carburant lorsqu'une survitesse est détectée. Selon le brevet US6494046, on mesure les fréquences de rotation aux deux extrémités de l'arbre au niveau des paliers et on les compare en continue et en temps réel. Le brevet GB 877127 décrit un moteur avec un capteur de température pour générer un signal en cas de surchauffe résultant d'une panne dans le circuit de refroidissement sans relation avec l'alimentation en carburant.

La présente invention vise une méthode simple et efficace pour réduire la vitesse de rotation, dans un moteur à turbine à gaz, d'une turbine comprenant un rotor entraînant un arbre et mobile en rotation à l'intérieur d'un stator, en cas de rupture dudit arbre.

La méthode est caractérisée par le fait qu'elle consiste à mesurer la température sur une surface du stator située en aval du rotor, à transmettre le signal de mesure à un moyen de commande du freinage du rotor, ledit moyen de commande étant agencé pour commander le freinage du rotor lorsque la température atteint un seuil. Ce moyen de freinage est de préférence le calculateur pilotant la commande de carburant alimentant la chambre de combustion du moteur. Lorsque la température atteint le seuil défini, le calculateur commande la fermeture de l'alimentation de carburant.

Il suffit d'un déplacement axial sur une faible distance pour que le rotor vienne au contact du stator et induise très rapidement un échauffement important par frottement. Les puissances enjeu sont effectivement élevées. La mesure de la température est donc un indicateur très efficace et susceptible d'atteindre très rapidement un niveau caractéristique de la rupture de l'arbre. L'interruption quasiment simultanée de l'alimentation en carburant permet d'éviter l'apparition d'une survitesse ou pour le moins de la limiter en supprimant le principal apport d'énergie à la roue de turbine. Cette disposition conduit à un gain en marge d'éclatement qui peut se traduire en gain de sécurité, de masse ou encore de niveau de résistance requis pour les pièces tournantes.

Un moyen avantageux est de mesurer la température avec un capteur à thermocouple, au moins un et de préférence une pluralité de capteurs à thermocouple répartis autour de l'axe de la machine.

Conformément à une autre caractéristique, le seuil de température est supérieur à la température maximale susceptible d'être atteinte pendant le fonctionnement du moteur. On évite ainsi les risques d'erreur dus aux réintroductions de gaz chaud notamment.

La présente invention porte également sur un moteur à turbine à gaz tel que caractérisé par la revendication 6

Le dispositif peut comprendre un ou une pluralité de capteurs.

Conformément à une autre caractéristique, le ou les capteurs à thermocouple comprennent une sonde fixée sur le stator par l'intermédiaire d'un enrobage céramique ou métallique. Cette disposition permet de placer la sonde du thermocouple à une faible distance du rotor adjacent tout en assurant sa protection en fonctionnement normal de manière à ce que le contact entre le rotor et le stator entraîne un échauffement rapide de la sonde du thermocouple pour une action rapide sur l'alimentation en carburant.

D'autres caractéristiques et avantages ressortiront de la description d'un mode de réalisation non limitatif de l'invention en référence aux dessins sur lesquels
La figure 1 montre une demi-coupe axiale de la section de turbine d'un moteur à turbine à gaz double corps, incorporant le dispositif de l'invention,
La figure 2 montre une coupe selon la direction II-II de la figure 1, au droit du capteur de température,
La figure 3 montre un schéma simplifié de la commande de carburant.

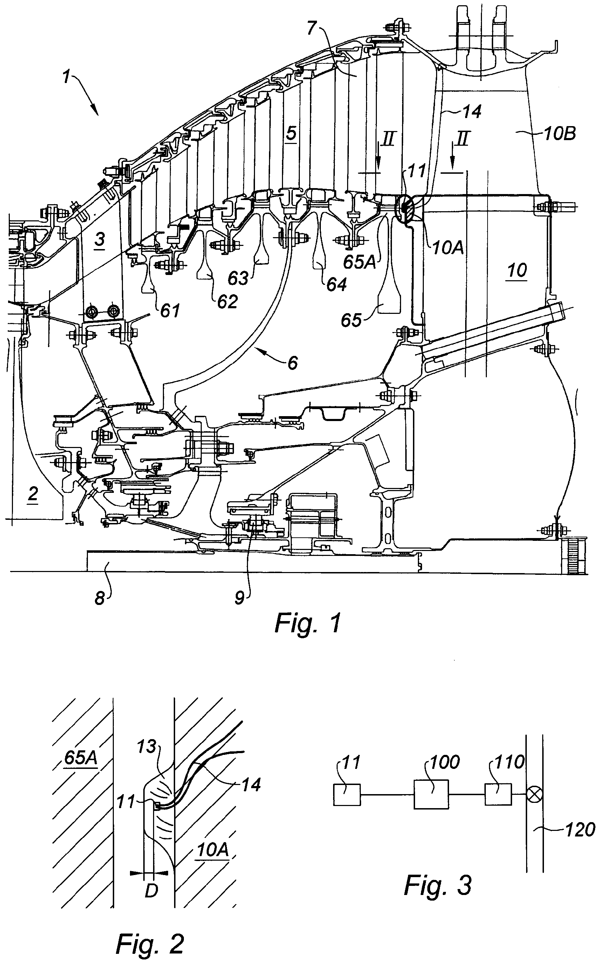

On voit sur la figure 1, une partie de la section de turbine 1 d'un moteur à turbine à gaz. Dans un moteur à double corps et double flux, la section de turbine 1 comprend une turbine haute pression 2 qui reçoit les gaz chauds de la chambre de combustion ici non représentée. Les gaz après avoir traversé l'aubage de la roue de turbine haute pression 2 sont dirigés, à travers une roue de distributeurs 3 fixes, sur la section de turbine basse pression 4. Cette section 5 est composée d'un rotor 6 formé, ici en tambour, de l'assemblage de plusieurs disques 61 à 65 aubagés, cinq dans cet exemple. Les aubes, comprenant une pale et un pied, sont montées, généralement individuellement, à la périphérie des disques dans des logements ménagés sur la jante. Des roues de distributeurs 7 fixes sont interposées entre les étages de turbine, chacune pour orienter convenablement le flux gazeux par rapport à l'aubage mobile aval. Cet ensemble forme la section 5 de turbine basse pression. Le rotor 6 de la turbine est monté sur un arbre 8, concentrique à l'arbre haute pression, non représenté sur la figure, qui se prolonge axialement vers l'avant du moteur où il est solidaire du rotor de soufflante. L'ensemble tournant est supporté par des paliers appropriés situés dans les parties avant et arrière du moteur. Sur la figure 1, on voit l'arbre 8 supporté par un palier 9, dans le carter structural, désigné carter d'échappement 10. Le carter d'échappement est pourvu de moyens d'attaches pour un montage sur un aéronef.

Lorsqu'en fonctionnement du moteur, l'arbre 8 se rompt accidentellement, l'ensemble mobile de la turbine basse pression se déplace vers l'arrière, vers la droite sur la figure, en raison de la pression exercée par les gaz. Par ailleurs, il est accéléré en rotation en raison de la disparition de sa charge combinée à la poussée tangentielle que les gaz chauds continuent d'exercer sur les aubages mobiles pendant leur traversée de la turbine et il augmente de diamètre.

Pour empêcher, conformément à l'invention, que le rotor de turbine s'emballe, on agit sur la commande de carburant de façon à assurer l'extinction de la combustion. Sans cet apport d'énergie la vitesse du rotor chute rapidement du fait des frottements imposés par les contacts résultant des déplacements axiaux et radiaux.

On dispose un capteur 11 de température, et de préférence une pluralité de capteurs, sur les parties du stator de la section de turbine qui viendraient très tôt au contact d'une partie mobile après rupture de l'arbre et le déplacement axial ou radial qui s'ensuivrait.

Avantageusement, ces capteurs sont disposés sur le carter d'échappement 10 et plus particulièrement sur la partie 10A du stator à une distance radiale de l'axe moteur XX correspondant à celle de la jante 65A du disque 65 du dernier étage de la turbine. Les capteurs sont disposés dans la partie 10A du stator de façon à être aussi près que possible de la surface qui est en vis à vis de la jante 65A. Il est souhaitable que cette distance soit suffisamment faible pour que le rotor vienne prioritairement au contact de la partie du stator incorporant les capteurs. Lorsque le rotor est poussé vers l'arrière, la jante 65A vient en contact avec le stator 10A tout en continuant de tourner. Le frottement produit un échauffement et une augmentation de la température du stator 10A. En disposant les capteurs 11 convenablement, on s'assure qu'ils sont soumis eux-mêmes à une élévation de température avec un faible retard dans le temps par rapport aux surfaces en contact l'une avec l'autre.

Une autre position favorable est située sous le distributeur du premier étage de la turbine.

On utilise de préférence des capteurs à thermocouple. Un thermocouple comprend comme cela est connu une jonction chaude formant la sonde venant en contact avec l'environnement dont on veut mesurer la température. Cette sonde est reliée par des fils à une jonction froide maintenue à une température de référence.

Selon le mode de réalisation représenté, la sonde du capteur 11 est noyée dans une masse 13 céramique ou métallique, collée ou fixée sur le flanc amont de cette partie 10A de stator 10, en vis-à-vis de la jante du disque 65A. Les fils 14 du thermocouple reliant la sonde à l'organe de commande sont guidés à travers la cavité d'un bras radial 10B du carter d'échappement 10 jusqu'au calculateur de commande de l'alimentation en carburant de la chambre combustion. Comme cela est représenté sur la figure 2, la sonde avec la jonction chaude est à une distance D de la surface de la masse céramique ou métallique rapportée, aussi faible que possible afin de réagir rapidement en cas de contact, compte tenu du fait qu'elle doit être protégée des agressions par les gaz chauds en fonctionnement normal du moteur.

Sur la figure 2 la masse 13, céramique telle qu'une base zircone ou alumine, ou métallique tel qu'un alliage à base de NiCoAl ou un alliage à base de NiAl, peut avoir été déposée au moyen d'un faisceau plasma. L'épaisseur du dépôt peut par exemple être de l'ordre de 2 à 4 mm. La sonde 11 est ainsi noyée dans la masse en étant à une distance D qui peut être faible, autorisant son échauffement rapide.

Sur la figure 3, on voit une représentation schématique de la chaîne de commande. La sonde produit un signal correspondant à la mesure de la température au calculateur 100. Il s'agit par exemple du Boîtier de régulation électronique à pleine autorité qui est l'organe de régulation du moteur. On le désigne par le terme FADEC qui est l'acronyme de Full Authority Digital Electronic Control. Il pilote la commande 110 de la vanne de carburant 111 sur la canalisation 120 alimentant la chambre de combustion du moteur à turbine à gaz.

Lorsque la température mesurée dépasse un seuil déterminé le calculateur envoie la consigne de fermer la vanne 111 de carburant. Le seuil est par exemple au-delà de la marge EGT (Exhaust Gaz Temperature ou température des gaz en sortie). Il s'agit de la différence entre la température à laquelle on doit faire fonctionner le moteur pour obtenir la poussée souhaitée et la température de certification.

## Revendications

1. Méthode pour réduire la vitesse de rotation, dans un moteur à turbine à gaz, d'une turbine comprenant un rotor (6) entraînant un arbre (8) et mobile en rotation à l'intérieur d'un stator (7), en cas de rupture dudit arbre, **caractérisée par le fait qu'**elle consiste à mesurer (11) la température en un point sur une surface du stator (10A) située en aval du rotor (6), transmettre le signal de mesure à un moyen de commande (100) du freinage du rotor, ledit moyen de commande étant agencé pour commander le freinage du rotor lorsque la température atteint un seuil.

2. Méthode selon la revendication précédente dont le moyen de commande est la commande de carburant alimentant la chambre de combustion du moteur.

3. Méthode selon l'une des revendications précédentes selon laquelle on mesure la température au moyen d'au moins un capteur à thermocouple.

4. Méthode selon la revendication précédente selon laquelle on mesure la température en une pluralité de points répartis autour de l'axe de la turbine au moyen d'une pluralité de capteurs à thermocouple.

5. Méthode selon l'une des revendications précédentes selon laquelle le seuil de température est supérieur à la température maximale susceptible d'être atteinte pendant le fonctionnement du moteur.

6. Moteur à turbine à gaz comprenant un organe (100) de commande de carburant et un dispositif pour réduire la vitesse de rotation d'une turbine comprenant un rotor (6) avec un disque (65) de turbine pourvu d'une jante (65A), entraînant un arbre (8) et mobile en rotation par rapport à un stator (10A), en cas de rupture dudit arbre de la turbine, **caractérisé par le fait que** le dispositif comprend un capteur (11) de température à thermocouple disposé sur le stator (10A) immédiatement en aval de la jante et relié à l' organe (100) de commande de carburant du moteur, ledit organe (100) étant agencé pour couper l'alimentation en carburant lorsque le signal émis par le capteur est supérieur à un seuil déterminé.

7. Moteur à turbine à gaz selon la revendication 6 dont le dispositif comprend une pluralité de capteurs à thermocouple.

8. Moteur à turbine à gaz selon la revendication 6 dont le capteur (11) à thermocouple comprend une sonde fixée sur le stator par l'intermédiaire d'un enrobage céramique (13).

## Patentansprüche

1. Verfahren, um in einem Gasturbinenmotor die Drehzahl einer Turbine, die einen Rotor (6) umfasst, der eine Welle (8) antreibt und im Inneren eines Stators (7) drehbeweglich ist, im Falle eines Bruchs der Welle zu reduzieren, **dadurch gekennzeichnet, dass** es darin besteht, die Temperatur an einem Punkt auf einer Oberfläche des Stators (10A), die stromabwärts des Rotors (6) liegt, zu messen (11), das Messsignal an ein Steuermittel (100) der Abbremsung des Rotors zu übertragen, wobei das Steuermittel dafür eingerichtet ist, die Abbremsung des Rotors zu steuern, wenn die Temperatur eine Schwelle erreicht.

2. Verfahren nach dem vorstehenden Anspruch, wobei das Steuermittel die Kraftstoffsteuerung ist, die die Brennkammer des Motors speist.

3. Verfahren nach einem der vorstehenden Ansprüche, wobei die Temperatur mittels mindestens eines Thermoelement-Sensors gemessen wird.

4. Verfahren nach dem vorstehenden Anspruch, wobei die Temperatur mittels einer Vielzahl von Thermoelement-Sensoren an einer Vielzahl von Punkten gemessen wird, die um die Achse der Turbine herum verteilt sind.

5. Verfahren nach einem der vorstehenden Ansprüche, wobei die Temperaturschwelle höher ist als die maximale Temperatur, die im Betrieb des Motors erreicht werden kann.

6. Gasturbinenmotor, umfassend ein Kraftstoffsteuerorgan (100) und eine Vorrichtung, um die Drehzahl einer Turbine, die einen Rotor (6) mit einer mit einer Felge (65A) versehenen Turbinenscheibe (65) umfasst, der eine Welle (8) antreibt und in Bezug auf einen Stator (10A) drehbeweglich ist, im Falle eines Bruchs der Welle der Turbine zu reduzieren, **dadurch gekennzeichnet, dass** die Vorrichtung einen Thermoelement-Temperatursensor (11) umfasst, der auf dem Stator (10A) unmittelbar stromabwärts der Felge angeordnet und mit dem Kraftstoffsteuerorgan (100) des Motors verbunden ist, wobei das Organ (100) dafür eingerichtet ist, die Kraftstoffspeisung zu unterbrechen, wenn das von dem Sensor ausgegebene Signal höher als eine vorbestimmte Schwelle ist.

7. Gasturbinenmotor nach Anspruch 6, wobei die Vorrichtung eine Vielzahl von Thermoelement-Sensoren umfasst.

8. Gasturbinenmotor nach Anspruch 6, wobei der Thermoelement-Sensor (11) einen Fühler umfasst, der mithilfe eines keramischen Überzugs (13) auf dem Stator befestigt ist.

## Claims

1. Method for reducing the rotational speed, in a gas turbine engine, of a turbine comprising a rotor (6) driving a shaft (8) and able to rotate inside a stator (7), in the event of fracture of said shaft, **characterised by** the fact that it consists in measuring (11) the temperature at a point on a surface of the stator (10A) located downstream of the rotor (6), and it transmits the measurement signal to a control means (100) for braking the rotor, said control means being arranged to control the braking of the rotor when the temperature reaches a threshold.

2. Method as claimed in the preceding claim, wherein the control means is the control for the fuel supplying the engine combustion chamber.

3. Method as claimed in one of the preceding claims whereby the temperature is measured using at least one thermocouple sensor.

4. Method as claimed in the preceding claim, whereby the temperature is measured at a plurality of points distributed around the axis of the turbine using a plurality of thermocouple sensors.

5. Method as claimed in one of the preceding claims whereby the temperature threshold is greater than the maximum temperature liable to be reached while the engine is running.

6. Gas turbine engine comprising a fuel control element (100) and a device for reducing the rotational speed of a turbine comprising a rotor (6) with a turbine disc (65) provided with a rim (65A), driving a shaft (8) and able to rotate in relation to a stator (10A), in the event of the fracture of said turbine shaft, **characterised by** the fact that the device comprises a thermocouple temperature sensor (11) arranged on the stator (10A) immediately downstream from the rim and connected to the engine fuel control element (100), said element (100) being arranged to shut off the supply of fuel when the signal emitted by the sensor is greater than a determined threshold.

7. Gas turbine engine as claimed in claim 6 wherein the device comprises a plurality of thermocouple sensors.

8. Gas turbine engine as claimed in claim 6 of which the thermocouple sensor (11) comprises a probe attached to the stator by means of a ceramic coating (13).
